# EUROPEAN PATENT SPECIFICATION

(11) **EP 3 348 467 B1**
(45) Date of publication and mention of the grant of the patent: **21.07.2021**
(21) Application number: 18151310.2
(22) Date of filing: 12.01.2018
(51) Int. Cl.: B62M 6/55, B62J 13/00

(54) **CHAIN GUARD FOR AN ELECTRIC BICYCLE**
KETTENSCHUTZ FÜR EIN ELEKTROFAHRRAD
GARDE-CHAÎNE DESTINÉ À UNE BICYCLETTE ÉLECTRIQUE

(30) Priority: 13.01.2017 DE 102017100589
(43) Date of publication of application: 18.07.2018
(73) Proprietor: Miranda & Irmão Lda., 3754-909 Águeda (PT)
(72) Inventor: Tavares Miranda, Joao Filipe, 3754-909 Agueda (PT)
(74) Representative: Freischem & Partner Patentanwälte mbB

(56) References cited:
- EP-A2- 0 736 449
- DE-U1-202013 104 630
- DE-U1-202014 005 667
- DE-U1-202015 103 692
- US-B1- 6 591 929

## Description

### Technical Field

This application relates to a chain guard for an electric bicycle having an electric motor with a motor housing as defined by the preamble of claim 1. The chain guard is mounted to the motor housing in order to cover a section of a chain located on a sprocket driven by the electric motor.

### Background Art

German utility model DE 20 2015 103 692 U1 describes a chain guard device with a mounting ring mounted to the motor housing and a cover fixed onto the mounting ring corresponding to the preamble of claim 1. For dismounting the chain guard, it is necessary to dismount the crank, the sprocket and the ring nut fixing the sprocket to the motor housing. German utility model DE 20 2013 104 630 U1 discloses a chain guard with a mounting bracket screwed to the motor housing and surrounding the crank shaft and a chain cover screwed to the mounting bracket. Again, it is necessary to remove the crank and the sprocket from the motor housing in order to remove the mounting bracket of the chain guard. German utility model DE 20 2014 005 667 U1 describes a chain guard having two parts. The first part has the form of a ring that surrounds the sprocket. The second part is fixed to the annular first part and extends from the ring along the chain. It is necessary to remove at least the crank in order to remove the first annular part of the chain guard. Document EP 0 736 449 A2 discloses a power assisted bicycle with a chain cover 532 which seems to be fabricated from bent sheet metal. The extension of this chain cover and the means for fixing it to the bicycle are not disclosed.

### Disclosure of Invention

It is an object of the invention to provide a chain guard that can be easily mounted and dismounted and that also enhances the security of the chain drive.

The object is obtained by the combination of features of independent claim one. The dependent claims provide useful embodiments of the chain guard described herein.

The chain guard for an electric bicycle having an electric motor with a motor housing comprises two lateral sections extending at a distance from and parallel to one another at least over a ring section that corresponds to a portion of the sprocket engaging the chain. The chain guard comprises at least one peripheral section extending between the two lateral sections and defining a gap between the two lateral sections for accommodating the chain.

This chain guard does not comprise a full ring but extends only over a ring section that corresponds to the portion of the sprocket engaging the chain. Conventionally, the electric motor of an electric bicycle is arranged in the region of the bottom bracket of the bicycle and the cranks with the pedals are fixed to a crank shaft. The sprocket is mounted concentrically to the crank shaft and rotationally linked to the motor so that the pedals as well as the electric motor may drive the sprocket. The chain guard described herein extends only over the portion of the sprocket engaging the chain, generally over the front half of the sprocket. The chain guard can be easily removed in the forward direction of the bicycle. It is not necessary to remove any further parts like the pedal, the crank or the sprocket in order to remove the chain guard. The chain guard can simply be slid back and forth with the chain on the sprocket moving within the gap between the two lateral sections of the chain guard.

Nevertheless, the chain guard covers the entire ring section in which the chain engages the sprocket as well as the periphery of the chain engaging the sprocket. This prevents the clothing of the rider from entering the engagement area of the chain and sprocket and also protects the chain and sprocket against soiling.

It is to be noted that the chain guard does not necessarily have to end at the end of the engagement section of the sprocket and the chain. The chain guard may comprise extensions in the direction of the chain close to the sprocket, i.e. in the backward direction of the bicycle. Such straight extensions do not block the sliding movement when mounting or removing the chain guard.

In one embodiment the means for mounting the chain guard to the motor housing comprises at least one through hole for accommodating a screw screwed into a threaded hole of the motor housing. The chain guard preferably comprises injection molded plastic parts and in practice, at least one and preferably 3 to 5 through holes are provided in the chain guard. The through holes align with threaded holes in the motor housing. The screws extending through the through holes fix the chain guard securely and quickly to the motor housing. The chain guard can also be easily removed with a screwdriver without dismounting any other part of the chain drive system.

In an embodiment the chain guard may comprise two parts. One of the two parts is a mounting element that comprises the first lateral section which is brought into contact with the motor housing. The other part is a cover that comprises the second lateral section and covers the outer surface of the chain on the sprocket remote from the motor housing. As mentioned above, the mounting element and the cover may be fixed to one another by means of at least one screw.

The chain guard has the shape of two parallel flat ring sections connected to one another by a peripheral section, maintaining them parallel to and at a distance from one another. This shape can easily be produced by injection molding plastic parts, each comprising one of the ring sections and a portion of the peripheral section. Both parts may have aligned through holes so that the screws extending through the aligned through holes of both parts fix the parts to one another while fixing the chain guard to the motor housing simultaneously.

At least one lateral section of the chain guard may comprise apertures that allow for a visual inspection of the chain and the sprocket. They further facilitate the removal of soil and other contaminations from the gap accommodating the chain and the sprocket. Apertures on the mounting element may accommodate projections on the motor housing. The lateral sections of the chain guard may be composed of a rib structure containing multiple apertures. While the rib structure provides the protection needed, the apertures reduce the total weight of the chain guard and reduce the risk of accumulated soil and contamination in the chain guard that otherwise could block the chain.

The width of the gap between the two lateral sections may be less than twice the width of the chain. Limiting the width of the gap between the two lateral sections to less than twice the chain width keeps the chain from coming off the sprocket. The clearance between the outer face of the sprocket and the inner face of the lateral section of the chain guard is smaller than the width of the chain so that the chain cannot move through this clear space and leave the gap.

Additionally, the dimensions of the chain guard are defined so that when mounted on the motor housing, the teeth of the sprocket are at a distance from the radially inner side of the peripheral section that is less than the diameter of the rollers of the chain. This ensures that the rollers cannot escape the teeth they are engaging with. If a roller should move radially outward, it would touch the inside of the peripheral section of the chain guard before the roller becomes disengaged from the tooth.

This application also refers to an electric bicycle with an electric motor having a motor housing and a chain guard as described above.

In an embodiment, the ring section covered by the lateral sections of the chain guard extends concentric to the crank shaft. The lateral sections of the chain guard thus cover both sides of the sprocket and the chain engaging the sprocket. As noted above, the lateral sections of the chain guard may comprise extensions in the backward direction of the bicycle that cover portions of the chain close to but not yet engaging the sprocket.

As noted above, the clearance between each lateral face of the sprocket and the adjacent lateral section of the chain guard may be less than the width of the chain so that the chain guard prevents the chain from coming off the sprocket. The clearance between at least one peripheral section and the teeth of the sprocket in the radial direction of the sprocket may be less than the roller diameter of the chain. This ensures that the roller engaging a specific tooth of the chain cannot become disengaged because it would touch the chain guard before the tooth could pass underneath it.

### Brief Description of Drawings

A practical embodiment of the chain guard is described in the following with reference to the attached drawings.
Figure 1 is a three dimensional view of an electric motor and a chain guard as described herein.
Figure 2 is a three dimensional view of the motor and the chain guard of Fig. 1 showing the individual parts of the chain guard.
Figure 3 is a side view of the motor with the chain guard of Fig. 1 and 2.

### Description of Embodiments

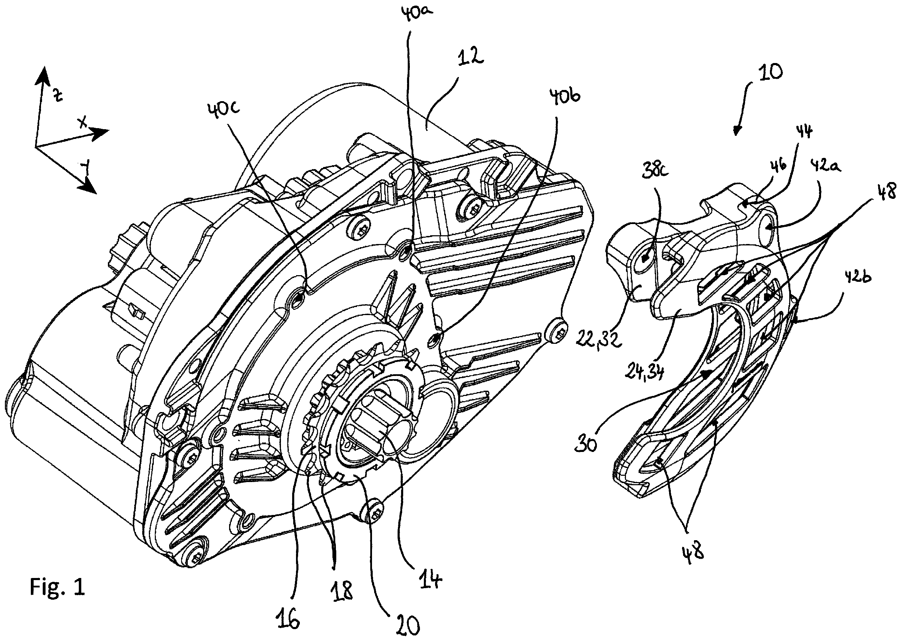

Figure 1 shows the housing 12 of an electric motor for an electric bicycle and a chain guard 10 that is designed to be fixed to the housing 12. All Figures comprise arrows for indicating the directions X, Y and Z. The direction X is the forward direction of the electric bicycle equipped with the motor. The direction Y is the lateral extension of the electric bicycle. Direction Z is the upward vertical direction.

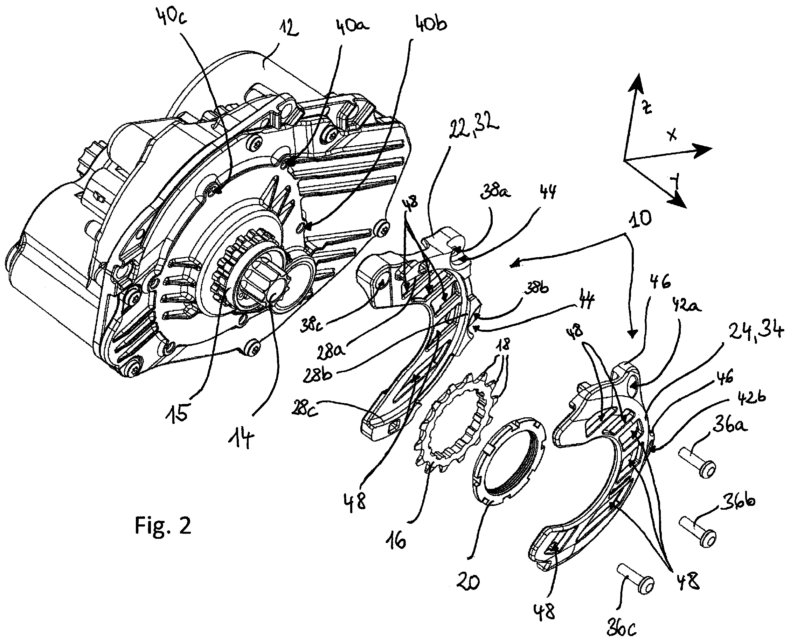

Figure 1 shows the two toothed ends of a crank shaft 14 extending through the housing 12. The cranks with the pedals that can be fixed to the toothed ends are not shown. The crank shaft 14 is concentric to a hollow shaft 15 (see Fig. 2) to which a sprocket 16 may be fixed. The electric motor in the housing 12 may engage with and drive the hollow shaft 15. The crankshaft 14 inside the hollow shaft 15 may also rotationally engage the hollow shaft 15 in order to drive the sprocket 16.

The sprocket 16 has teeth but only some of the teeth are marked with a reference number 18. A ring nut 20 fixes the sprocket 16 to a toothed portion of the hollow shaft 15. The sprocket 16 engages a chain (not shown), approximately in the front half of the sprocket 16 in the forward direction X.

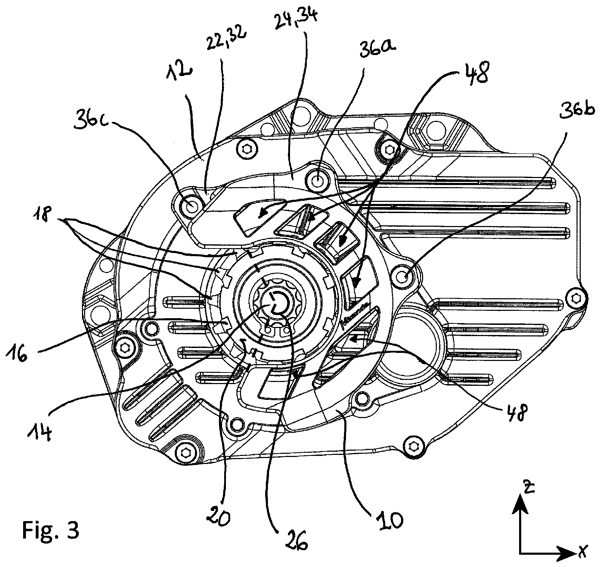

The chain guard 10 comprises two lateral sections 22, 24 that extend generally parallel to one another at a predefined distance. The chain guard 10 extends over the section of the ring (ref. number 26 in Figure 3), which generally corresponds to the region of engagement of the chain on the sprocket 16. The two parallel lateral sections 22, 24 are connected to one another via peripheral sections 28a, 28b, 28c (Figure 2). These peripheral sections 28a, 28b, 28c extend laterally in the Y direction between the two lateral sections 22, 24. Radially inside the peripheral sections 28a, 28b, 28c and between the two lateral sections 22, 24 is a gap 30 for accommodating the chain and at least the teeth 18 of the sprocket 16.

Figure 2 shows the elements of the chain guard 10 and parts of the chain drive in an exploded view. The chain guard 10 comprises two parts. The first part is a mounting element 32 which includes the first lateral section 22. It is designed for being brought into contact with the motor housing 12 in the region surrounding the crank shaft 14 and the sprocket 16. The mounting element 32 further includes three peripheral sections 28a, 28b, 28c in the periphery of the lateral section 22. The second part of the chain guard 10 is a cover 34 that has projections 46 which match and engage recesses 44 of the mounting element 32. These matching recesses 44 and projections 46 on the cover 34 and the mounting element 32 make the alignment and the connection of these two parts simpler. Note that while the drawings show the recesses 44 on the mounting element 32 and the projections 46 on the cover 34, it is also possible to provide the projections on the mounting element 32 and the recesses on the cover 34. The cover 34 may also include parts of the peripheral sections of the chain guard 10. In practice, the peripheral sections may be either on the mounting element 32 or on the cover 34 or on both.

For assembling the drive system of an electric bike, the sprocket 16 is fixed on the hollow shaft 15 by means of the ring nut 20. This configuration is visible in Figure 1. Then, the chain will be placed on the teeth 18 of the sprocket 16. Finally, the two parts of the chain guard 10 will be assembled and slid over the chain on the sprocket 16 opposite to the X direction, i.e. in the rear direction of the bicycle. It is also possible to first mount the mounting element 32, then mount the sprocket 16 with the ring nut 20 and engage the chain before fixing the cover 34 to the housing 12 of the electric motor.

The mounting element 32 is fixed to the housing 12 by means of three screws 36a, 36b, 36c. The mounting element 32 comprises three through holes 38a, 38b, 38c. The screws 36a, 36b, 36c extend through the respective through holes 38a, 38b, 38c and engage in a threaded hole 40a, 40b, 40c of the motor housing 12.

The cover 34 comprises two through holes 42a and 42b for the screws 36a, 36b. The through holes 42a and 42b are brought into alignment with the through holes 38a and 38b, as well as with the threaded holes 40a and 40b before the screws are inserted. The screw 36c only passes through the through hole 38c of the mounting element 32 and has no contact with the cover 34. By unscrewing the screws 36a and 36b the cover 34 may be removed from the mounting element 32 while the mounting element 32 remains attached to the housing 12 by means of the screw 36c.

As can be seen in particular in Figure 1, the lateral sections 22 and 24 of the chain guard 10 extend parallel to one another at a predefined distance and form a gap 30 between one another. The width of this gap 30 is less than twice the width of the chain to be accommodated therein. This ensures that this chain cannot pass laterally between the sprocket 16 and the adjacent face of the lateral section 24 of the cover 34 or the adjacent face of the lateral section 22 of the mounting element 32 of the chain guard 10.

Further, the dimension of the chain guard 10, in particular the radius of the peripheral sections 28a, 28b, 28c is chosen so that the distance between the tips of the teeth 18 of the sprocket 16 and the peripheral sections 28a, 28b, 28c in the radial direction of the sprocket 16 is less than the diameter of a roller of the chain. Consequently, the peripheral sections 28a, 28b, 28c of the chain guard 10 keep the chain from moving out of the sprocket 16 in the radial direction and from becoming disengaged with the teeth 18 of the sprocket 16.

The chain guard 10 avoids disengagement of the chain from the sprocket 16 in all three directions X, Y and Z. At the same time, the chain guard 10 reduces the soiling of the chain and the sprocket 16 and avoids the contact of clothes with the chain and the sprocket 16.

Figure 3 shows a side view of the chain guard 10 mounted to the motor housing 12. It can be seen that the chain guard 10 extends over a ring section 26 of approximately 230°. It is to be noted that the peripheral section of the chain guard preferably covers a ring section of approximately 180° so that it does not touch the sprocket 16 and the chain when the chain guard 10 is slid over the sprocket 16. Note that the peripheral section may extend straight in the rear direction (opposite to the X-direction) in order to cover the chain portions behind the sprocket.

Both, the mounting element 32 and the cover 34 have a plurality of apertures 48. In fact, only small ribs remain between those apertures 48. The ribs between the apertures 48 provide good protection against contacting and soiling the sprocket 16 and the chain, while the apertures 48 allow for a removal of contaminations and soiling from the gap 30.

### Reference numerals

- 10: chain guard
- 12: motor housing
- 14: crank shaft
- 15: hollow shaft
- 16: sprocket
- 18: tooth
- 20: ring nut
- 22: lateral section
- 24: lateral section
- 26: ring section
- 28a, b, c: peripheral section
- 30: gap
- 32: mounting element
- 34: cover
- 36a, b, c: screw
- 38a,b, c: through hole
- 40a, b, c: threaded hole
- 42a, b: through hole
- 44: recess
- 46: projection
- 48: aperture

## Claims

1. Chain guard (10) for an electric bicycle having an electric motor with a motor housing (12), the chain guard (10) comprising means for mounting it to the motor housing (12) so that the chain guard (10) covers a section of a chain located on a sprocket (16) driven by the electric motor, the chain guard comprising two lateral sections (22, 24) extending at a distance from and parallel to one another, the chain guard further comprising at least one peripheral section (28a, 28b, 28c) extending between the two lateral sections (22, 24) and defining a gap (30) between the two lateral sections (22, 24) for accommodating the chain, **characterized in that** the chain guard (10) extends only over a ring section (26) that corresponds to a portion of the sprocket (16) engaging the chain .

2. Chain guard (10) of claim 1, **characterized in that** the means for mounting the chain guard (10) to the motor housing is at least one through hole (38a, 38b, 38c) for accommodating a screw (36a, 36b, 36c) screwed into a threaded hole (40a, 40b, 40c) of the motor housing (12).

3. Chain guard (10) of one of the preceding claims, **characterized in that** it comprises two parts.

4. Chain guard (10) of claim 3, **characterized in that** one of the two parts is a mounting element (32) comprising the first lateral section (22) and the other part is a cover (34) comprising the second lateral section (24).

5. Chain guard (10) of claim 4, **characterized in that** the mounting element (32) and the cover (34) are fixed to one another by means of at least one screw (36a, 36b, 36c).

6. Chain guard (10) of one of the preceding claims, **characterized in that** at least one of the lateral sections (22, 24) comprises apertures (48).

7. Chain guard (10) of one of the preceding claims, **characterized in that** the width of the gap (30) between the two lateral sections (22, 24) is less than twice the width of the chain.

8. Electric bicycle with an electric motor having a motor housing (12), **characterized by** a chain guard (10) of one of the preceding claims.

9. Electric bicycle of claim 8, **characterized in that** the ring section (26) covered by the lateral sections (22, 24) of the chain guard (10) extends concentric to the sprocket (16).

10. Electric bicycle of claim 8, **characterized in that** the sprocket (16) driven by the electric motor is fixed concentric to a crank shaft (14) and that a chain engages the sprocket (16).

11. Electric bicycle of claim 10, **characterized in that** the clearance between each lateral face of the sprocket (16) and the adjacent lateral section (22, 24) of the chain guard (10) is less than the width of the chain.

12. Electric bicycle of one of claims 10 or 11, **characterized in that** the clearance between the at least one peripheral section (28a, 28b, 28c) and the teeth (18) of the sprocket (16) is less than the roller diameter of the chain.

## Patentansprüche

1. Kettenschutz (10) für ein Elektrofahrrad mit einem Elektromotor mit einem Motorgehäuse (12), wobei der Kettenschutz (10) Mittel aufweist, um den Kettenschutz (10) an dem Motorgehäuse (12) zu befestigen, so dass der Kettenschutz (10) einen Teil der Kette auf einem von dem Elektromotor angetriebenen Zahnrad (16) bedeckt, wobei der Kettenschutz (10) zwei Seitenabschnitte (22, 24) aufweist, welche sich im Abstand voneinander und parallel zueinander erstrecken, und wobei der Kettenschutz (10) ferner mindestens einen Umfangsabschnitt (28a, 28b, 28c) aufweist, der sich zwischen den beiden Seitenabschnitten (22, 24) derart erstreckt, dass zwischen den beiden Seitenabschnitten (22, 24) ein Spalt (30) zur Aufnahme der Kette ausgebildet ist, **dadurch gekennzeichnet, dass** sich der Kettenschutz (10) nur über einen Ringabschnitt (26) erstreckt, der einem Abschnitt des Zahnrads (16) entspricht, der in Eingriff mit der Kette steht.

2. Kettenschutz (10) nach Anspruch 1, **dadurch gekennzeichnet, dass** als Mittel zur Befestigung des Kettenschutzes (10) an dem Motorgehäuse (12) mindestens ein Durchgangsloch (38a, 38b, 38c) zur Aufnahme einer Schraube (36a, 36b, 36c) dient, die in ein Gewindeloch (40a, 40b, 40c) des Motorgehäuse (12) einschraubbar ist.

3. Kettenschutz (10) nach einem der vorstehenden Ansprüche, **dadurch gekennzeichnet, dass** er zwei Teile aufweist.

4. Kettenschutz (10) nach Anspruch 3, **dadurch gekennzeichnet, dass** einer der beiden Teile ein Befestigungselement (32) mit dem ersten Seitenabschnitt (22) und der andere Teil ein Deckelement (34) mit dem zweiten Seitenabschnitt (24) ist.

5. Kettenschutz (10) nach Anspruch 4, **dadurch gekennzeichnet, dass** das Befestigungselement (32) und das Deckelement (34) mittels mindestens einer Schraube (36a, 36b, 36c) miteinander verbunden sind.

6. Kettenschutz (10) nach einem der vorstehenden Ansprüche, **dadurch gekennzeichnet, dass** mindestens ein Seitenabschnitt (22, 24) Durchbrüche (48) aufweist.

7. Kettenschutz (10) nach einem der vorstehenden Ansprüche, **dadurch gekennzeichnet, dass** die Breite des Spaltes (30) zwischen den beiden Seitenabschnitten (22, 24) weniger als der doppelten Breite der Kette entspricht.

8. Elektrofahrrad mit einem Elektromotor mit einem Motorgehäuse (12), **gekennzeichnet durch** einen Kettenschutz (10) nach einem der vorstehenden Ansprüche.

9. Elektrofahrrad nach Anspruch 8, **dadurch gekennzeichnet, dass** sich der Ringabschnitt (26), der von den Seitenabschnitten (22, 24) des Kettenschutzes (10) bedeckt ist, konzentrisch zu dem Zahnrad (16) erstreckt.

10. Elektrofahrrad nach einem der Ansprüche 8, **dadurch gekennzeichnet dass** das Zahnrad (16), welches von dem Elektromotor angetrieben wird, konzentrisch auf einer Tretlagerwelle (14) angeordnet ist, und dass das Zahnrad (16) mit der Kette in Eingriff steht.

11. Elektrofahrrad nach Anspruch 10, **dadurch gekennzeichnet, dass** der Abstand zwischen jeder seitlichen Fläche des Zahnrades (16) zu den benachbarten Seitenabschnitten (22, 24) des Kettenschutzes (10) kleiner ist als die Breite der Kette.

12. Elektrofahrrad nach einem der Ansprüche 8 bis 11, **dadurch gekennzeichnet, dass** der Abstand des mindestens einen Umfangsabschnittes (28a, 28b, 28c) und den Zähnen (18) des Zahnrads (16) kleiner ist als der Rollendurchmesser der Kette.

## Revendications

1. Garde-chaîne (10) pour une bicyclette électrique ayant un moteur électrique avec un boîtier de moteur (12), le garde-chaîne (10) comprenant des moyens pour le monter sur le boîtier de moteur (12) de sorte que le garde-chaîne (10) couvre une section d'une chaîne située sur un pignon (16) entraîné par le moteur électrique, le garde-chaîne comprenant deux sections latérales (22, 24) s'étendant à une distance l'une de l'autre et parallèlement l'une à l'autre, le garde-chaîne comprenant en outre au moins une section périphérique (28a, 28b, 28c) s'étendant entre les deux sections latérales (22, 24) et définissant un espace (30) entre les deux sections latérales (22, 24) pour recevoir la chaîne, **caractérisé en ce que** le garde-chaîne (10) s'étend uniquement sur une section annulaire (26) qui correspond à une partie du pignon (16) en prise avec la chaîne.

2. Garde-chaîne (10) selon la revendication 1, **caractérisé en ce que** le moyen pour monter le garde-chaîne (10) sur le boîtier de moteur est au moins un trou traversant (38a, 38b, 38c) pour recevoir une vis (36a, 36b, 36c) vissée dans un trou fileté (40a, 40b, 40c) du boîtier de moteur (12).

3. Garde-chaîne (10) selon l'une des revendications précédentes, **caractérisé en ce qu'**il comprend deux parties.

4. Garde-chaîne (10) selon la revendication 3, **caractérisé en ce que** l'une des deux parties est un élément de montage (32) comprenant la première section latérale (22) et l'autre partie est un couvercle (34) comprenant la seconde section latérale (24).

5. Garde-chaîne (10) selon la revendication 4, **caractérisé en ce que** l'élément de montage (32) et le couvercle (34) sont fixés l'un à l'autre au moyen d'au moins une vis (36a, 36b, 36c).

6. Garde-chaîne (10) selon l'une des revendications précédentes, **caractérisé en ce qu'**au moins une des sections latérales (22, 24) comprend des ouvertures (48).

7. Garde-chaîne (10) selon l'une des revendications précédentes, **caractérisé en ce que** la largeur de l'espace (30) entre les deux sections latérales (22, 24) est inférieure à deux fois la largeur de la chaîne.

8. Bicyclette électrique avec un moteur électrique ayant un boîtier de moteur (12), **caractérisée par** un garde-chaîne (10) de l'une des revendications précédentes.

9. Bicyclette électrique selon la revendication 8, **caractérisée en ce que** la section annulaire (26) couverte par les sections latérales (22, 24) du garde-chaîne (10) s'étend concentriquement au pignon (16).

10. Bicyclette électrique selon la revendication 8, **caractérisée en ce que** le pignon (16) entraîné par le moteur électrique est fixé concentriquement à un vilebrequin (14) et qu'une chaîne est en prise avec le pignon (16).

11. Bicyclette électrique selon la revendication 10, **caractérisée en ce que** le jeu entre chaque face latérale du pignon (16) et la section latérale adjacente (22, 24) du garde-chaîne (10) est inférieur à la largeur de la chaîne.

12. Bicyclette électrique selon l'une des revendications 10 ou 11, **caractérisée en ce que** le jeu entre l'au moins une section périphérique (28a, 28b, 28c) et les dents (18) du pignon (16) est inférieur au diamètre de rouleau de la chaîne.
